# EUROPEAN PATENT SPECIFICATION

(11) **EP 3 018 289 B1**
(45) Date of publication and mention of the grant of the patent: **03.01.2018**
(21) Application number: 15187459.1
(22) Date of filing: 29.09.2015
(51) Int. Cl.: F01D 5/14, B64C 11/20, B64D 45/02, F01D 5/28

(54) **FAN BLADE WITH STATIC DISSIPATIVE COATING**
BLÄSERSCHAUFEL MIT STATISCH DISSIPATIVER BESCHICHTUNG
PALE DE SOUFFLANTE À REVÊTEMENT DISSIPATIF STATIQUE

(30) Priority: 30.09.2014 US 201462057798 P
(43) Date of publication of application: 11.05.2016
(73) Proprietor: United Technologies Corporation, Farmington, CT 06032 (US)
(72) Inventor: ROBERTSON, Thomas J., Glastonbury, CT Connecticut 06033 (US); WEBB, Scot A., Gales Ferry, CT Connecticut 06335 (US)
(74) Representative: Leckey, David Herbert

(56) References cited:
- EP-A1- 2 604 794
- US-A- 2 776 253
- US-A- 2 959 229
- US-A1- 2014 010 663
- US-A1- 2014 083 080
- US-A1- 2014 109 546

## Description

### TECHNICAL FIELD OF THE DISCLOSED EMBODIMENTS

The present disclosure is generally related to gas turbine engines and, more specifically, a fan blade with static dissipative coating.

### BACKGROUND OF THE DISCLOSED EMBODIMENTS

Gas turbine engines are known, and typically include a fan delivering air into a compressor section. In the compressor section, the air is compressed and then delivered into a combustion section. The compressed air is mixed with fuel and burned in the combustion section. Products of this combustion pass downstream to drive turbine rotors.

The fan blades are subject to a large volume of air moving across an airfoil, and this can build up a large static electric charge if the air includes particulates, such as snow or dirt. Conventionally, the fan blades were formed of a conductive metal that was grounded to a hub that mounts the fan blade. As such, the charge would conduct into the hub.

More recently, fan blades have become larger. One factor driving the larger fan blades is the use of a gear reduction between a turbine driven spool which drives the fan blade and the spool. The gear reduction allows a single turbine rotor to drive both a compressor section and the fan, but at different speeds.

A fan blade body with a layer of titanium dioxide to provide a wear resistant tip that also thermally insulates the fan blade body is disclosed in US 2014/010663. US 2014/010954 discloses fan blades having sections which differ in terms of electrical conductivity.

As the size of the fan blade has increased, its weight has also increased. As such, efforts have been made to reduce the weight of fan blades. One modification is to change the material for the fan blade from titanium to an aluminum alloy. The aluminum alloy fan blades are generally covered with a polyurethane coating and fabric wear pads to protect the aluminum. These materials have insulation qualities and, thus, the blade may not be electrically grounded to a rotor.

Improvements in the dissipation of a static charge on fan blades are therefore needed in the art.

### SUMMARY OF THE DISCLOSED EMBODIMENTS

In one aspect, a fan blade used in a gas turbine engine is provided. The fan blade includes a metallic fan blade body, including a body outer surface, the fan blade body extends radially outwardly from a dovetail or root. A fan blade body leading edge and a fan blade body trailing edge define the forward and rear limits of the metallic fan blade body. A static dissipative coating material is disposed on the body outer surface and on the root. The static dissipative coating includes a paracrystalline material which includes carbon black.

In one embodiment, the fan blade further includes a metallic fan blade leading edge sheath operably coupled to the fan blade body leading edge. The static dissipative coating material is in contact with the fan blade leading edge sheath to aid in the dissipation of a static electric charge that builds on the fan blade as it rotates.

In one embodiment, a grounding component is operably coupled to the leading edge of the root. In one embodiment, at least one non-conductive pad is disposed around at least a portion of the root and the at least one non-conductive pad is in contact with the grounding component.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

Other embodiments are also disclosed.

### BRIEF DESCRIPTION OF THE DRAWINGS

The embodiments and other features, advantages and disclosures contained herein, and the manner of attaining them, will become apparent and the present disclosure will be better understood by reference to the following description of various exemplary embodiments of the present disclosure taken in conjunction with the accompanying drawings, wherein:
FIG. 1 is a sectional view of one example of a turbine engine in which the presently disclosed embodiments may be used;
FIG. 2 is a perspective view of a fan blade in an embodiment; and
FIG. 3 is a perspective view of a fan blade inserted into a fan rotor in an embodiment.

### DETAILED DESCRIPTION OF THE DISCLOSED EMBODIMENTS

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended.

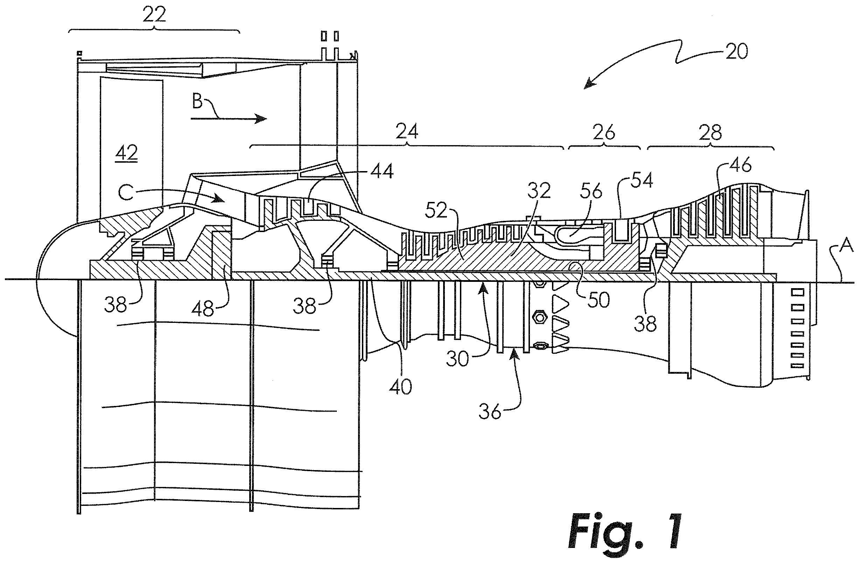

FIG. 1 shows a gas turbine engine 20, such as a gas turbine used for power generation or propulsion, circumferentially disposed about an engine centerline, or axial centerline axis A. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,688 meters). The flight condition of 0.8 Mach and 35,000 ft. (10,688 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram ^{∘}R) / (518.7 ^{∘}R)]^{0.5}. The "Low corrected fan tip speed" as disclosed herein according to one non-limiting embodiment is less than about 1150 ft / second (350.5 m/sec).

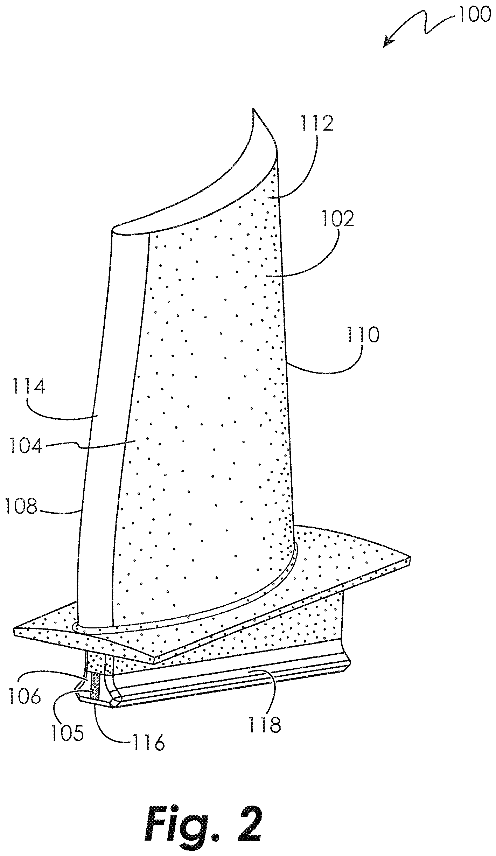

Referring to FIG. 2, a fan blade 100 may be used in an engine such as the engine 20. The fan blade 100 includes a metallic fan blade body 102, including a body outer surface 104, the fan blade body 102 extends radially outwardly from a dovetail or root 106. A fan blade body leading edge 108 and a fan blade body trailing edge 110 define the forward and rear limits of the metallic fan blade body 102. It will be appreciated that the metallic fan blade body may be formed from aluminum or aluminum alloys to name a couple of non-limiting examples. A static dissipative coating material 112 is disposed on the body outer surface 104, wherein the static dissipative coating 112 includes a paracrystalline material. The static dissipative coating material 112 may be composed of a urethane to name one non-limiting example; however, other dissipative materials such as those described in MIL-HDBK-263B may be used. The static dissipative coating material is disposed on the root 106. The paracrystalline material includes carbon black. It will also be appreciated that a conductive material coating may be disposed on the body outer surface.

In one embodiment, the fan blade 100 further includes a metallic fan blade leading edge sheath 114 operably coupled to the fan blade body leading edge 108. The metallic fan blade leading edge sheath 114 may be formed from a conductive material, such as titanium or a titanium alloy to name a couple of non-limiting examples. The static dissipative coating material 112 is in contact with the fan blade leading edge sheath 114 to aid in the dissipation of a static electric charge that builds on the fan blade 100 as it rotates.

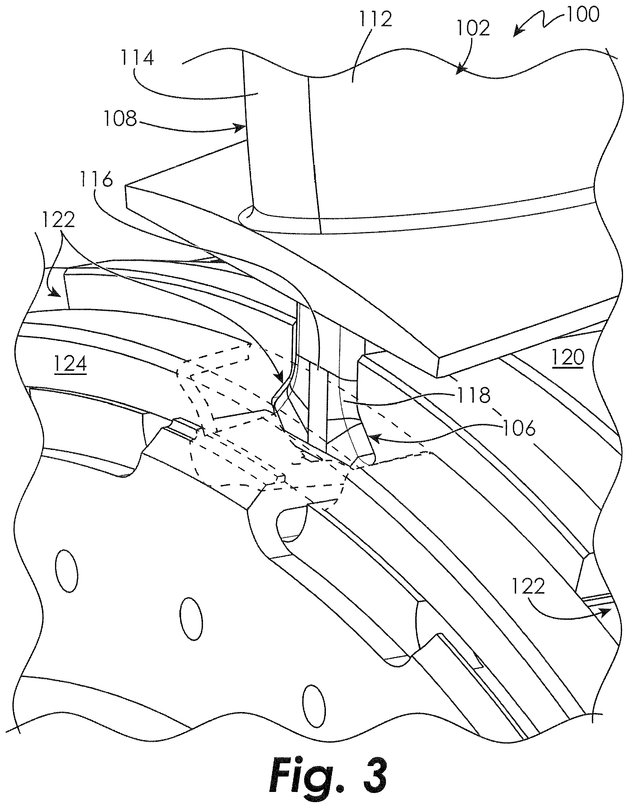

In one embodiment, a grounding component 116 is operably coupled to the leading edge 105 of the root 106. The grounding component 116 may be composed of an electrically conductive material, such as titanium or a titanium alloy to name a couple of non-limiting examples. The grounding component 116 may be coupled to the leading edge 105 of the root 106 via an adhesive, to name one non-limiting example. The grounding component 116 is configured to aid in the dissipation of a static electric charge from the metallic fan blade body to a lock ring 124; then, to a fan hub 120 (shown in FIG. 3).

In one embodiment, at least one non-conductive pad 118 is disposed around at least a portion of the root 106 and the at least one non-conductive pad 118 is in contact with the grounding component 116. The at least one non-conductive pad 118 is configured to ensure galvanic isolation between the metallic fan blade body 102 and the fan rotor 120 (shown in FIG. 3).

Referring to FIG. 3, a fan hub 120 receives the root 106 in a slot 122 to mount the fan blade 100 with the metallic fan blade body 102 extending radially outwardly. A lock ring 124 locks the fan blade 100 within the fan hub 120. As the fan hub 120 is driven to rotate, it carries the fan blade 100 with it. The lock ring 124 abuts the leading edge 105 of the root 106, and is also in contact with the grounding component 116.

It will be appreciated that as the fan hub 120 rotates and static charge builds on the fan blade 100, the static dissipative coating material 112 allows for discharge of the static charge while also preventing galvanic action between adjacent components, such as the fan blade leading edge sheath 114 and the metallic fan blade body 102.

While the invention has been illustrated and described in detail in the drawings and foregoing description, the same is to be considered as illustrative and not restrictive in character, it being understood that only certain embodiments have been shown and described and that all changes and modifications that come within the scope of the invention are desired to be protected.

## Claims

1. A fan blade (100) for a gas turbine engine comprising:
a metallic fan blade body (102), including a fan blade body leading edge (108) and a fan blade body outer surface (104), the fan blade body (102) extending radially outward from a root (106) including a root leading edge (105); and
a static dissipative coating material (112) disposed on the body outer surface (102) and on the root (106);
**characterized in that** said static dissipative coating material (112) includes a paracrystalline material which comprises carbon black.

2. The fan blade of claim 1, further comprising a metallic fan blade leading edge sheath (114) operably coupled to fan blade body leading edge (108), wherein the static dissipative coating material (112) is in contact with the metallic fan blade leading edge sheath (114).

3. The fan blade of claim 1 or claim 2, further comprising a grounding component (116) operably coupled to the root leading edge (105).

4. The fan blade of claim 3, further comprising at least one non-conductive pad (118) disposed around the root (106) or around at least a portion of the root (106) and in contact with the grounding component (116).

5. A fan assembly for use in a gas turbine engine comprising:
a rotor including at least one slot (122) configured to receive a fan blade (100) and a locking ring (124) configured to secure the fan blade (100); and
a fan blade (100) disposed within the at least one slot (122), wherein the fan blade (100) is a fan blade of any preceding claim.

6. A gas turbine engine (20) comprising:
a compressor section (24), a combustor section (26), and a turbine section (28) in serial flow communication;
a fan section (22) configured to deliver air into the compressor section (24), wherein the fan section (22) comprises a rotor including at least one slot (122), a locking ring (124), and a fan blade (100) disposed within the at least one slot (122), wherein the fan blade (100) is a fan blade of any of claims 1 to 4.

## Patentansprüche

1. Bläserschaufel (100) für einen Gasturbinenmotor, umfassend:
einen metallenen Bläserschaufelkörper (102), der eine Bläserschaufelkörper-Vorderkante (108) und eine Bläserschaufelkörper-Außenfläche (104) beinhaltet, wobei sich der Bläserschaufelkörper (102) radial auswärts von einem Schaufelfuß (106), der eine Schaufelfuß-Vorderkante (105) beinhaltet, erstreckt; und
ein statisch dissipatives Beschichtungsmaterial (112), das auf der Körperaußenfläche (102) und auf dem Schaufelfuß (106) angeordnet ist;
**dadurch gekennzeichnet, dass** das statisch dissipative Beschichtungsmaterial (112) ein parakristallines Material beinhaltet, das Ruß umfasst.

2. Bläserschaufel nach Anspruch 1, ferner umfassend eine metallene Bläserschaufel-Vorderkantenhülle (114), die mit der Bläserschaufelkörper-Vorderkante (108) wirkverbunden ist, wobei das statisch dissipative Material (112) mit der metallenen Bläserschaufel-Vorderkantenhülle (114) in Kontakt ist.

3. Bläserschaufel nach Anspruch 1 oder Anspruch 2, ferner umfassend eine Erdungskomponente (116), die mit der Schaufelfuß-Vorderkante (105) wirkverbunden ist.

4. Bläserschaufel nach Anspruch 3, ferner umfassend zumindest einen nichtleitenden Überzug (118), der um den Schaufelfuß (106) oder um zumindest einen Abschnitt des Schaufelfußes (106) und in Kontakt mit der Erdungskomponente (116) angeordnet ist.

5. Bläserbaugruppe zur Verwendung in einem Gasturbinenmotor, umfassend:
einen Rotor, der zumindest einen Schlitz (122), der zum Aufnehmen einer Bläserschaufel (100) konfiguriert ist, und eine Arretierung (124), die zum Sichern der Bläserschaufel (100) konfiguriert ist, beinhaltet; und
eine Bläserschaufel (100), die innerhalb des zumindest einen Schlitzes (122) angeordnet ist, wobei die Bläserschaufel (100) eine Bläserschaufel nach einem vorstehenden Anspruch ist.

6. Gasturbinenmotor (20), umfassend:
einen Verdichterbereich (24), einen Brennkammerbereich (26) und einen Turbinenbereich (28) in serieller Fluidverbindung;
einen Bläserbereich (22), der konfiguriert ist, um Luft in den Verdichterbereich (24) zuzuführen, wobei der Bläserbereich (22) einen Rotor umfasst, der zumindest einen Schlitz (122), eine Arretierung (124) und eine Bläserschaufel (100), die innerhalb des zumindest einen Schlitzes (122) angeordnet ist, beinhaltet, wobei die Bläserschaufel (100) eine Bläserschaufel nach einem der Ansprüche 1 bis 4 ist.

## Revendications

1. Pale de soufflante (100) pour une turbine à gaz comprenant :
un corps de pale de soufflante métallique (102), incluant un bord d'attaque de corps de pale de soufflante (108) et une surface externe de corps de pale de soufflante (104), le corps de pale de soufflante (102) s'étendant radialement vers l'extérieur à partir d'une emplanture (106) incluant un bord d'attaque d'emplanture (105) ; et
un matériau de revêtement dissipatif statique (112) disposé sur la surface externe de corps (102) et sur l'emplanture (106) ;
**caractérisée en ce que** ledit matériau de revêtement dissipatif statique (112) inclut un matériau paracristallin qui comprend du noir de carbone.

2. Pale de soufflante selon la revendication 1, comprenant en outre une gaine de bord d'attaque de pale de soufflante métallique (114) couplée opérationnellement au bord d'attaque de corps de pale de soufflante (108), dans laquelle le matériau de revêtement dissipatif statique (112) est en contact avec la gaine de bord d'attaque de pale de soufflante métallique (114).

3. Pale de soufflante selon la revendication 1 ou la revendication 2, comprenant en outre un composant de mise à la masse (116) couplé opérationnellement au bord d'attaque d'emplanture (105).

4. Pale de soufflante selon la revendication 3, comprenant en outre au moins un tampon non conducteur (118) disposé autour de l'emplanture (106) ou autour d'au moins une partie de l'emplanture (106) et en contact avec le composant de mise à la masse (116).

5. Ensemble soufflante destiné à être utilisé dans une turbine à gaz comprenant :
un rotor incluant au moins une fente (122) configurée pour recevoir une pale de soufflante (100) et une bague de verrouillage (124) configurée pour fixer la pale de soufflante (100) ; et
une pale de soufflante (100) disposée à l'intérieur de l'au moins une fente (122), dans lequel la pale de soufflante (100) est une pale de soufflante selon une quelconque revendication précédente.

6. Turbine à gaz (20) comprenant :
une section de compresseur (24), une section de chambre de combustion (26), et une section de turbine (28) en communication d'écoulement en série ;
une section de soufflante (22) configurée pour délivrer de l'air dans la section de compresseur (24), dans laquelle la section de soufflante (22) comprend un rotor incluant au moins une fente (122), une bague de verrouillage (124), et une pale de soufflante (100) disposée à l'intérieur de l'au moins une fente (122), dans laquelle la pale de soufflante (100) est une pale de soufflante selon l'une quelconque des revendications 1 à 4.
